(19) Europäisches Patentamt
European Patent Office
Office européen des brevets

(11) EP 2 045 803 A1

(12) EUROPEAN PATENT APPLICATION
published in accordance with Art. 153(4) EPC

(43) Date of publication:
08.04.2009 Bulletin 2009/15

(51) Int Cl.:
*G11B 7/09* (2006.01)

(21) Application number: 07768461.1

(22) Date of filing: 18.07.2007

(86) International application number:
PCT/JP2007/064532

(87) International publication number:
WO 2008/010596 (24.01.2008 Gazette 2008/04)

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(30) Priority: 20.07.2006 JP 2006198774

(71) Applicant: Sony Corporation
Tokyo 108-0075 (JP)

(72) Inventors:
• SUZUKI, Yuichi
  Tokyo 108-0075 (JP)
• ADACHI, Minoru
  Tokyo 108-0075 (JP)

(74) Representative: Körber, Martin Hans
Mitscherlich & Partner
Sonnenstraße 33
80331 München (DE)

(54) **OPTICAL DISC DEVICE, TRACKING ERROR SIGNAL GENERATING CIRCUIT, TRACKING ERROR SIGNAL CORRECTING METHOD, AND PROGRAM**

(57) In a DPP-type tracking error signal (TE signal), an offset caused by the difference between the reflectance of a main-beam irradiated part and the reflectance of side-beam irradiated parts is appropriately compensated without individual normalization of an MPP signal and an SPP signal. An analog signal processing unit 40 produces the MPP, MPI, SPP, and SPI signals on the basis of the amounts of received reflected light of the main beam and side beams detected by a photo-detection unit 130, produces a DPP-type TE signal and a CE signal on the basis of the MPP and/or SPP signal, and outputs the analog signals of the TE, CE, MPI, and SPI signals. A digital signal processing unit 50 computes the TE, CE, MPI, and SPI signals, which are converted into digital signals by an A/D conversion block 52, according to a predetermined arithmetic expression so as to produce a TE signal having an offset, which is derived from a variation in the reflectance of the main-beam irradiated part of the optical disk and/or the reflectance of the side-beam irradiated parts thereof, compensated.

[FIG. 7]

**Description**

Technical Field

The present invention relates to an optical disk device, a tracking error signal generating circuit, a tracking error signal correcting method, and a program. More particularly, the present invention is concerned with an optical disk device capable of properly correcting a tracking error signal to be used to control an irradiated position of a laser spot on an optical disk, a tracking error signal generating circuit, a tracking error signal correcting method, and a program.

Background Art

Optical disk devices are devices for recording or reproducing information in or from an optical disk by utilizing laser light. The optical disk device includes an optical pickup that spot-irradiates laser light, which is emitted from a light source (for example, a laser diode (LD)), to the recording surface of the optical disk by concentrating the laser light using an objective lens, and that uses a photo-detection unit (for example, a photodetector (PD)) to receive reflected light of the laser light reflected from the optical disk. In the optical disk device, a detection signal of an amount of light received by the photo-detection unit is computed in order to produce a servo signal such as a tracking error signal or a focus error signal. Thus, the irradiated position of a laser spot on the optical disk is servo-controlled.

As one of tracking error detection methods, there is a push-pull method of producing a tracking error signal on the basis of the difference (push-pull signal) between detection signals in bisectional light-receiving areas of a light receiving element included in the photo-detection unit. However, in the push-pull method utilizing one laser light alone, an offset occurs in the push-pull signal because of a positional deviation between the objective lens and photo-detection unit (hereinafter, an objective lens shift). In order to solve this problem, a differential push-pull (DPP) method of canceling the offset in the push-pull signal (hereinafter a PP signal) using a side beam has been proposed (refer to, for example, JP-A-2004-213768).

In the DPP method, a main beam (principal beam) and a side beam (secondary beam) into which laser light is diffracted and separated are irradiated to an optical disk. Push-pull signals of reflected light of the main beam and side beam are obtained, and the difference between the push-pull signals is computed at a predetermined ratio. In order to cancel an offset according to the DPP method, level adjustment has to be performed so that the signal level of a main push-pull (MPP) signal (a PP signal produced based on the difference between amounts of main-beam reflected light received in bisectional light-receiving areas) and the signal level of a side push-pull (SPP) signal (a PP signal produced based on the difference between amounts of side-beam reflected light received in bisectional light-receiving areas) will square with each other. The level adjustment is performed as gain control for an amplifier included in a matrix circuit, which obtains the difference between the MPP signal and SPP signal, during a process on a drive regulation line or during startup processing at the time of insertion of an optical disk.

However, since a main-beam irradiated part of an optical disk and side-beam irradiated parts thereof are different places (for example, a main beam is irradiated to a groove in an optical disk and side beams are irradiated to lands adjoining the groove), the reflectances of the two irradiated parts change from those required for initial gain control under conditions (a) and (b) mentioned below.

(a) The main-beam irradiated part and the side-beam irradiated part are a recorded part and an unrecorded part respectively or vice versa.

(b) Data is being recorded in the optical disk. The reflectance of the main-beam irradiated part decreases because a phenomenon such as a phase change occurs. However, the reflectance of the side-beam irradiated part does not decrease because a material change dose not occur.

In these cases, an MPP signal and an SPP signal have a level difference, a condition required for canceling an offset in a DPP signal is broken. As a result, an offset having occurred in a PP signal due to an objective lens shift or a radial skew remains as an offset in the DPP signal.

Moreover, when a DPP signal is normalized with a pull-in signal (hereinafter, a PI signal), if the reflectance of the main-beam irradiated part and the reflectance of the side-beam irradiated part are different from each other, the normalization is not achieved correctly.

Owing to a normalization circuit in an analog signal processing circuit, an MPP signal is normalized with an main pull-in (MPI) signal (a PI signal produced based on the sum of amounts of main-beam reflected light received in bisectional light-receiving surfaces), and an SPP signal is normalized with a side pull-in (SPI) signal (a PI signal produced based on the sum of amounts of side-beam reflected light received in the bisectional light-receiving surfaces). Thereafter, if DPP computation is performed, the foregoing problem can be avoided (refer to, for example, JP-A-2004-213768). In reality, a system having the constitution has been put to practical use. Moreover, it has been revealed that an offset or an amplitude fluctuation can be suppressed compared with that in a DPP signal not having each of an MPP signal and an SPP signal thereof normalized. However, the constitution requires multiple analog normalization circuits. This poses a problem in that a circuit scale, power consumption, and a cost increase.

The present invention addresses the foregoing problems. An object of the present invention is to provide a novel and improved optical disk device capable of appropriately compensating an offset, which is derived from the difference between the reflectance of a main-beam irradiated part and the reflectance of a side-beam irradiated part, in a DPP-type tracking error signal without individual normalization of an MPP signal and an SPP signal, a tracking error signal generating circuit, a tracking error signal correcting method, and a program.

Disclosure of the Invention

In order to solve the aforesaid problems, according to a certain aspect of the present invention, there is provided an optical disk device characterized by including: a photo-detection unit that receives reflected light of a main beam and side beams which are irradiated to an optical disk; an analog signal processing unit that produces a push-pull signal (MPP signal) and a pull-in signal (MPI signal) relevant to the main beam on the basis of an amount of received reflected light of the main beam detected by the photo-detection unit, produces a push-pull signal (SPP signal) and a pull-in signal (SPI signal) relevant to the side beams on the basis of an amount of received reflected light of the side beams detected by the photo-detection unit, produces a differential pull-pull (DPP)-type tacking error signal (TE signal) and a center error signal (CE signal), which contains an offset component of the MPP signal and/or SPP signal, on the basis of the MPP signal and/or SPP signal, and outputs the analog signals of the TE signal, CE signal, MPI signal, and SPI signal; an A/D conversion block that converts the analog signals of the TE signal, CE signal, MPI signal, and SPI signal, which are outputted from the analog signal processing unit, into digital signals; a digital signal processing unit that computes the TE signal, CE signal, MPI signal, and SPI signal, which are converted into the digital signals by the A/D conversion block, according to a predetermined arithmetic expression so as to produce a TE signal having an offset, which is derived from a variation in the reflectance of a main-beam irradiated part of the optical disk and/or the reflectance of side-beam irradiated parts thereof, compensated; and a tracking control unit that performs tracking control on the main-beam irradiated position on the optical disk on the basis of the TE signal corrected by the digital signal processing unit.

Owing to the foregoing constitution, the digital signal processing unit can compensate an offset in the TE signal, which is derived from a variation in the reflectance of the main-beam irradiated part of an optical disk and/or the reflectance of the side-beam irradiated part thereof, by computing the TE signal, CE signal, MPI signal, and SPI signal, but the analog signal processing unit need not individually normalize the MPP signal and SPP signal. Consequently, the corrected TE signal is used to properly perform track control on the main-beam irradiated position on the optical disk.

Moreover, the analog signal processing unit may neither normalize the MPP signal using the MPI signal nor normalize the SPP signal using the SPI signal. Consequently, multiple analog normalization circuits need not be incorporated in the analog signal processing unit.

Moreover, when the DPP-type TE signal is a type of DPP signal having a track modulating component manifested in the SPP signal, the analog signal processing unit may produce the CE signal on the basis of the sum of the MPP signal and the SPP signal whose signal levels are matched with each other. Consequently, after the signal levels of the MPP signal and SPP signal are matched with each other, the sum of the MPP and SPP signals is obtained in order to produce the CE signal. The CE signal is used to properly correct the TE signal that is the above type of DPP signal.

When the DPP-type TE signal is a type of DPP signal having no track modulating component manifested in the SPP signal, the analog signal processing unit may produce the CE signal on the basis of the SPP signal. Consequently, the CE signal is produced based on the SPP signal, and used to correct the TE signal that is the above type of DPP signal.

In order to solve the aforesaid problems, according to another aspect of the present invention, there is provided a tracking error signal generating circuit characterized by including: an analog signal processing unit that produces a push-pull signal (MPP signal) and a pull-in signal (MPI signal) relevant to a main beam on the basis of an amount of received reflected light of the main beam irradiated to an optical disk, produces a push-pull signal (SPP signal) and a pull-in signal (SPI signal) relevant to side beams on the basis of an amount of received reflected light of the side beams irradiated to the optical disk, produces a differential push-pull (DPP)-type tracking error signal (TE signal) and a center error signal (CE signal), which contains an offset component of the MPP signal and/or SPP signal, on the basis of the MPP signal and/or SPP signal, and outputs the analog signals of the TE signal, CE signal, MPI signal, and SPI signal; an A/D conversion block that converts the analog signals of the TE signal, CE signal, MPI signal, and SPI signal, which are outputted from the analog signal processing unit, into digital signals; and a digital signal processing unit that computes the TE signal, CE signal, MPI signal, and SPI signal, which are converted into the digital signals by the A/D conversion block, according to a predetermined arithmetic expression so as to produce a TE signal having an offset, which is derived from a variation in the reflectance of a main-beam irradiated part of the optical disk and/or the reflectance of side-beam irradiated parts thereof, compensated. Owing to this constitution, the same operation and advantage as those of the aforesaid optical disk device are exerted.

Moreover, the analog signal processing unit may neither normalize the MPP signal using the MPI signal nor normalize the SPP signal using the SPI signal.

Moreover, when the DPP-type TE signal is a type of DPP signal having a track modulating component manifested in the SPP signal, the analog signal processing unit may produce the CE signal on the basis of the sum of the MPP signal and the SPP signal whose signal levels are matched with each other.

Moreover, when the DPP-type TE signal is a type of DPP signal having no track modulating component manifested in the SPP signal, the analog signal processing unit may produce the CE signal on the basis of the SPP signal.

In order to solve the aforesaid problems, according to another aspect of the present invention, there is provided a tracking error signal correcting method characterized by including: a step at which an analog signal processing unit produces a push-pull signal (MPP signal) and a pull-in signal (MPI signal) relevant to a main beam on the basis of an amount of received reflected light of the main beam irradiated to an optical disk, produces a push-pull signal (SPP signal) and a pull-in signal (SPI signal) relevant to side beams on the basis of an amount of received reflected light of the side beams irradiated to the optical disk, produces a differential push-pull (DPP)-type tracking error signal (TE signal) and a center error signal (CE signal), which contains an offset component of the MPP signal and/or SPP signal, on the basis of the MPP signal and/or SPP signal, and outputs the analog signals of the TE signal, CE signal, MPI signal, and SPI signal; a step at which the analog signals of the TE signal, CE signal, MPI signal, and SPI signal which are outputted from the analog signal processing unit are converted into digital signals; and a step at which a digital signal processing unit computes the TE signal, CE signal, MPI signal, and SPI signal, which are converted into the digital signals, according to a predetermined arithmetic expression so as to produce a TE signal having an offset, which is derived from a variation in the reflectance of a main-beam irradiated part of an optical disk and/or the reflectance of side-beam irradiated parts thereof, compensated. Owing to the constitution, the same operation and advantage as those of the aforesaid optical disk device are exerted.

Moreover, in order to solve the aforesaid problems, according to another aspect of the present invention, there is provided a program causing a computer to execute: a step at which an analog signal processing unit produces a push-pull signal (MPP signal) and a pull-in signal (MPI signal) relevant to a main beam on the basis of an amount of received reflected light of the main beam irradiated to an optical disk, produces a push-pull signal (SPP signal) and a pull-in signal (SPI signal) relevant to side beams on the basis of an amount of received reflected light of the side beams irradiated to the optical disk, produces a differential push-pull (DPP)-type tracking error signal (TE signal) and a center error signal (CE signal), which contains an offset component of the MPP signal and/or SPP signal, on the basis of the MPP signal and/or SPP signal, and outputs the analog signals of the TE signal, CE signal, MPI signal, and SPI signal; a step at which the analog signals of the TE signal, CE signal, MPI signal, and SPI signal which are outputted from the analog signal processing unit are converted into digital signals; and a step at which a digital signal processing unit computes the TE signal, CE signal, MPI signal, and SPI signal, which are converted into the digital signals, according to a predetermined arithmetic expression so as to produce a TE signal having an offset, which is derived from a variation in the reflectance of a main-beam irradiated part of an optical disk and/or the reflectance of side-beam irradiated parts thereof, compensated. Owing to the constitution, the same operation and advantage as those of the aforesaid optical disk device are exerted.

As mentioned above, according to the present invention, an offset in a DPP-type tracking error signal which is derived from the difference between the reflectance of a main-beam irradiated part and the reflectance of side-beam irradiated parts can be appropriately compensated without individual normalization of an MPP signal and an SPP signal.

Brief Description of the Drawings

Fig. 1 is an explanatory diagram showing the constitution of an optical disk device in accordance with the first embodiment of the present invention;
Fig. 2 is an illustrative diagram showing an example of the constitution of an optical system of an optical pickup in accordance with the first embodiment;
Fig. 3 is a plan view showing a light receiving surface of a photo-detection unit in accordance with the first embodiment;
Fig. 4 includes explanatory diagrams showing the principle of production of a push-pull signal in accordance with the first embodiment;
Fig. 5 includes explanatory diagrams showing the principle of occurrence of an offset in a push-pull signal in accordance with the first embodiment;

Fig. 6 includes explanatory diagrams showing the principle of production of a DPP signal in accordance with the first embodiment;

Fig. 7 is a block diagram showing the overall constitution of a servo control circuit in the optical disk device in accordance with the first embodiment;

Fig. 8 is a circuit diagram showing the constitution of an analog signal processing unit in accordance with the first embodiment;

Fig. 9 is a block diagram showing the constitution of a digital signal processing unit in accordance with the first embodiment;

Fig. 10 is a circuit diagram showing the constitution of an analog signal processing unit in accordance with the second embodiment of the present invention;

Fig. 11 is a block diagram showing the constitution of a digital signal processing unit in accordance with the second embodiment;

Fig. 12 is an explanatory diagram showing a corrected TE signal in accordance with the first embodiment in comparison with a conventional normalized TE signal;

Fig. 13 is an explanatory diagram showing a corrected TE signal in accordance with the first embodiment in comparison with the conventional normalized TE signal;

Fig. 14 is an explanatory diagram showing a corrected TE signal in accordance with the second embodiment in comparison with a conventional normalized TE signal; and

Fig. 15 is an explanatory diagram showing the corrected TE signal in accordance with the second embodiment in comparison with the conventional normalized TE signal.

Best Mode for Carrying Out the Invention

Referring to the appended drawings, preferred embodiments of the present invention will be described below. In the description and drawings, the same reference numerals will be assigned to components having substantially identical functionalities and redundant explanations are omitted.

(First Embodiment)

To begin with, an optical disk device 1, a servo control circuit 30 serving as a tracking error signal generating circuit, a tracking error signal correcting method, and a program in accordance with the first embodiment of the present invention will be described below.

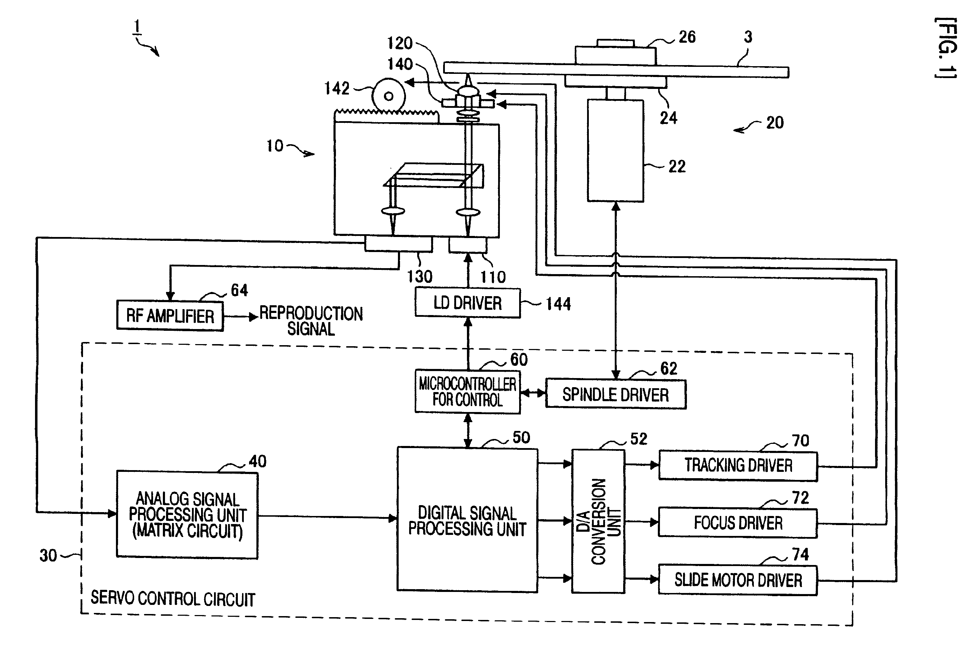

Referring to Fig. 1, the overall constitution of the optical disk derive 1 in accordance with the present embodiment will be described below. Fig. 1 is an explanatory diagram showing the constitution of the optical disk device 1 in accordance with the present embodiment.

As shown in Fig. 1, the optical disk device 1 in accordance with the present embodiment is a device capable of recording and/or reproducing data in or from an optical disk 3 on the basis of an instruction sent from external host equipment (personal computer, digital video camera, or the like) (not shown). As the optical disk 3, for example, a phase-change optical disk such as a compact disk (CD), a digital versatile disc (DVD), a Blu-ray disc, or any other next-generation DVD, an magneto-optical disk (MO disk), or any other optical disk can be adopted as far as it is a recording medium that utilizes light for reading or writing data. The optical disk 3 may be any of, for example, a reproduction-only optical disk (CD read-only memory (ROM), DVD-ROM, etc.), a write-once optical disk (CD-recordable (R), DVD-R, etc.), and a rewritable optical disk (CD-rewritable (RW), DVD-RW, CD-RAM, DVD-RAM, MO, etc.).

The optical disk device 1 in accordance with the present embodiment generally includes an optical pickup 10 that is composed of optical components, irradiates laser light to the optical disk 3, and receives reflected light, a disk drive unit 20 that includes various types of actuators and a motor and drives the optical disk 3 to rotate, and the servo control circuit 30 that performs various pieces of signal processing so as to control the optical pickup 10 and disk drive unit 20.

The optical pickup 10 includes a laser diode (LD) 110 that is an example of a light-emitting element which emits laser light, an objective lens 120 that is opposed to the recording surface of the optical disk 3, concentrates incident laser light, and irradiates spotlight to the optical disk 3, a photo-detection unit 130 that receives reflected light of laser light reflected from the optical disk 3 and detects an amount of received light, a biaxial actuator 140 that is an example of an objective lens moving means which moves the objective lens 120, a slide motor 142 that slides the optical pickup 10 in the radial direction of the optical disk 3, and an LD driver 144 that drives the laser diode 110.

Among the above components, the biaxial actuator 140 can move the objective lens 120 in a tracking direction (the radial direction of the optical disk 3) and a focus direction (a direction perpendicular to the recording surface of the optical disk 3) at a high speed with high precision. When the position of the objective lens 120 is finely adjusted in the focus direction and tracking direction by means of the biaxial actuator 140, positional control (focus control, tracking control) can be performed on the irradiated position (laser spot) of laser light on the optical disk 3. Consequently, the focal position of the objective lens 120 can be accurately aligned with the recording surface of the optical disk 3 according to the superficial deflection (deflection in the height direction of the optical disk 3 and the objective lens 120) of the optical disk 3 occurring during rotation. Moreover, the irradiated position of the laser spot can be caused to accurately follow a target track according to the track deflection (deflection in the radial direction of the optical disk 3 and the objective lens 120, that is, a track modulating component) of the optical disk 3.

Moreover, the photo-detection unit 130 is formed, for example, with an opto-electronic integrated circuit (OEIC) including multiple photodetectors and an amplifier. The photo-detection unit 130 includes multiple light receiving elements (photodetectors), and outputs a signal, which is obtained by photoelectrically converting amounts of light received by the respective light receiving elements, to the servo control circuit 30. Moreover, a radiofrequency signal expressing the result of reproduction of information recorded in the optical disk 3 is outputted from the photo-detection unit 130 to an RF amplifier 64. After amplified by the RF amplifier 64, the radiofrequency signal is outputted as a reproduction signal to the host equipment.

The disk drive unit 20 includes a spindle motor 22 that drives the optical disk 3 to rotate, a spindle 24 that is coupled to the spindle motor 22 and supports the optical disk 3 so that the optical disk 3 can rotate, and a disk clamp 26 attached to the spindle 24. The spindle motor 22 of the disk drive unit 20 is controlled by a microcontroller 60 for control and a spindle driver 62 which are included in the servo control circuit 30, and drives the optical disk 3 to rotate at a predetermined speed.

The servo control circuit 30 includes: an analog signal processing unit 40 that processes a detection signal outputted from the photo-detection unit 130 so as to produce a servo error signal or the like; a digital signal processing unit 50 that performs correction processing or the like on the servo error signal (tracking error signal, focus error signal, etc.) inputted from the analog signal processing unit 40; the microcontroller 60 for control that controls the overall operation of the servo control circuit 30; the spindle driver 62 that drives the spindle motor 22 on the basis of an instruction sent from the microcontroller 60 for control; a tracking driver 70 (tracking control unit) that drives a tracking coil (not shown) of the biaxial actuator 140 on the basis of a tracking error signal inputted from the digital signal processing unit 50; a focus driver 72 (focus control unit) that drives a focusing coil (not shown) of the biaxial actuator 140 based on the tracking error signal inputted from the digital signal processing unit 50; and a slide motor driver 74 that drives the slide motor 142 on the basis of a control signal inputted from the digital signal processing unit 50. The optical disk device 1 in accordance with the present embodiment is characterized by production of a tracking error signal by the servo control circuit 30 and correction processing thereof. The details will be given later.

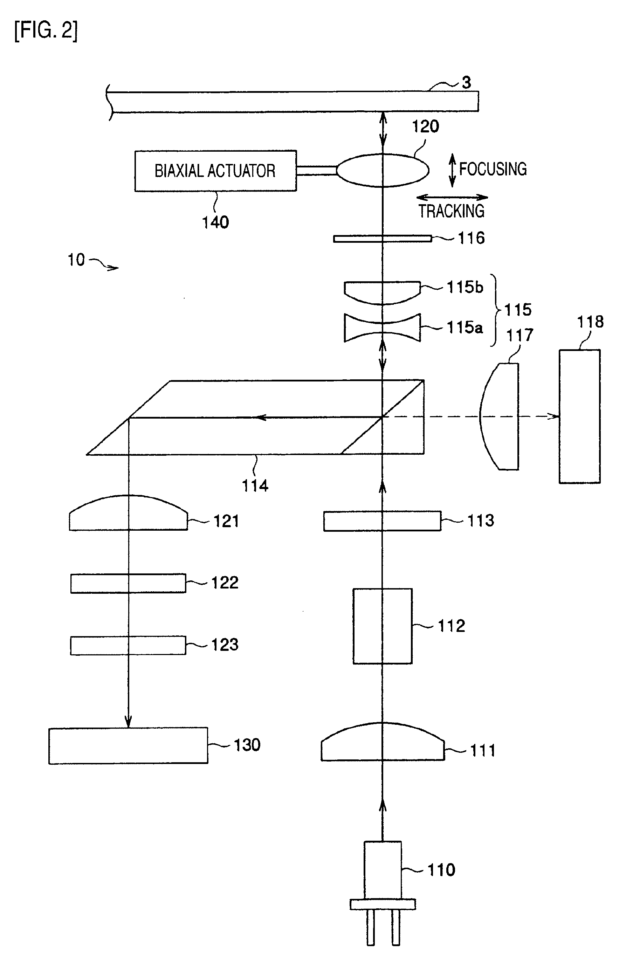

Next, referring to Fig. 2, a concrete example of an optical system of the optical pickup 10 in accordance with the present embodiment will be described below. Fig. 2 is an illustrative diagram showing an example of the constitution of the optical system of the optical pickup 10 in accordance with the present embodiment.

As shown in Fig. 2, the optical pickup 10 causes laser light, which is emitted from the laser diode 110 that is a light emitting element, to enter the objective lens 120 via a collimator lens 111, an anamorphic prism 112, a grating 113, a beam splitter 114, a beam expander 115, and a quarter-wave plate 116 in this order, and thus irradiates the laser light to the optical disk 3. Further, the optical pickup 10 uses the light receiving unit 130 to receive the laser light, which is reflected from the optical disk 3, via the objective lens 120, the quarter-wave plate 116, the beam expander 115, the beam splitter 114, a collimator lens 121, a hologram plate 122, and a cylindrical lens 123 in this order.

Laser light emitted from the laser diode 110 is converted from diverging rays into parallel rays by the collimator lens 111, and then reshaped from an elliptic sectional shape to a circular sectional shape by the anamorphic prism 112. Further, the laser light is separated into one main beam (principal luminous flux; 0-order light) and multiple (for example, two in the case of a normal three-beam DPP) side beams (secondary luminous fluxes; ± 1st-order light) by the grating 113 that is a diffraction grating. The main beam is a laser beam that forms a main spot to be used to record/reproduce data in/from the recording surface of the optical disk 3. Moreover, for example, two side beams are laser beams that have mutually opposite polarities, have a certain aberration, and form a pair of side spots at positions separated from the main spot on the recording surface of the optical disk 3.

The laser light (main beam and side beams) emitted from the grating 113 passes through the beam splitter 114, and enters the beam expander 115. Moreover, the beam splitter 114 reflects part of the laser light, and irradiates the reflected light to a front monitor photodetector 118 via a collimator lens 117. The front monitor photodetector 118 photoelectrically converts the incident laser light to detect an amount of received light, and outputs the detection signal to the microcontroller 60 for control of the servo control circuit 30. Accordingly, the microcontroller 60 for control and LD driver 144 perform feedback control so that the emissive intensity of the laser light emitted from the laser diode 110 will remain constant.

The beam expander 115 includes, for example, a movable concave lens 115a and a stationary convex lens 115b. By adjusting the distance between the lenses 115a and 115b, a spherical aberration markedly manifested when a two-group objective lens 120 exhibiting a high numerical aperture (NA) is employed can be compensated. The laser light emitted from the beam expander 115 enters the quarter-wave plate 116 via a setup mirror that is not shown. The quarter-wave plate 116 gives a phase difference of 90° to the incident laser light, converts the laser light from linearly polarized light to circularly polarized light, and causes the circularly polarized light to enter the objective lens 120. Moreover, the quarter-wave plate 116 converts the laser light of the circularly polarized light, which is reflected from the optical disk 3, into the linearly polarized light. The objective lens 120 is formed with the two-group objective lens, exhibits a numerical aperture (NA) of, for example, 0.85, concentrates laser light having passed through the beam expander 115, and irradiates a laser spot (the main spot and side spots) on the recording surface of the optical disk 3. The main-spot irradiation causes the recording layer of the optical disk 3 to undergo phase change, whereby various kinds of data items are recorded, rewritten, or reproduced in or from the recording track of the optical disk 3. During the irradiation, positional control of the objective lens 120 using the biaxial actuator 140, that is, tracking control and focusing control are performed so that the main spot will be irradiated to the center of a track while having an appropriate spot diameter.

In the optical disk 3 such as an actual DVD, recording tracks in which data are recorded are called grooves, and formed like grooves each of which has a swell (wobble) at a predetermined amplitude and a predetermined frequency. A projection called a land is formed between grooves. In the present embodiment, the main spot is irradiated to the groove in the optical disk 3, and the side spots are irradiated to the lands. The present invention is not limited to this example.

The laser light irradiated to the optical disk 3 as mentioned above has the intensity thereof modulated with record information in the recording track of the optical disk 3, and is then reflected. The reflected laser light passes through the objective lens 120, quarter-wave plate 116, and beam expander 115, and reflects from the beam splitter 114. The laser light reflected from the beam splitter 114 is converted into converging rays by the collimator lens 121. Thereafter, the laser light is subjected to optical processing, which is intended to obtain a focus error signal according to a spot-size detection (SSD) method, by means of the hologram plate 122 and cylindrical lens 123, and is separated into, for example, two side beams and a main beam. The side beams and main beam enter the photo-detection unit 130. The photo-detection unit 130 includes multiple light receiving elements (for example, photodetectors) that receive reflected light of the main beam and side beams irradiated to the optical disk 3.

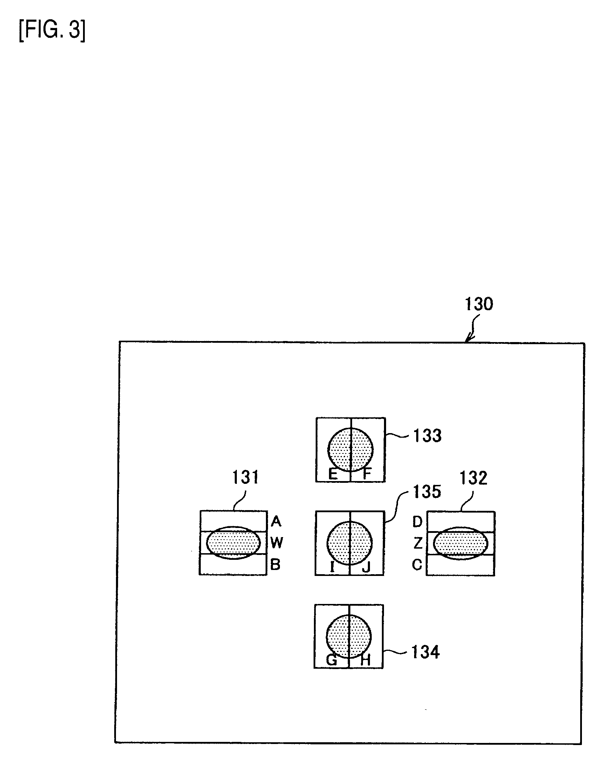

Referring to Fig. 3, an example of the arrangement of the light receiving elements of the photo-detection unit 130 in accordance with the present invention will be described below. Fig. 3 is a plan view showing the light receiving surface of the photo-detection unit 130 in accordance with the present invention.

As shown in Fig. 3, for example, five light receiving elements 131, 132, 133, 134, and 135 for detecting reflected light of laser light are disposed on the light receiving surface of the photo-detection unit 130. The light receiving elements 131 and 132 have the positional relationship of being opposed to each other on the left and right of the light receiving element 135, and the light receiving elements 133 and 134 have the positional relationship of being opposed to each other above and below the light receiving element 135. Return light of laser light reflected from the optical disk 3 is irradiated to the substantial centers of the respective light receiving elements 131, 132, 133, 134, and 135, whereby beam spots are formed in the substantial centers thereof.

The light receiving elements 131 and 132 are light receiving elements for use in producing a focus error (FE) signal, and have the light receiving surfaces thereof trisected in an up-and-down direction into three light receiving areas A, W, and B (or D, Z, and C). The light receiving elements 133, 134, and 135 are light receiving elements for use in producing a tracking error (TE) signal, and have the light receiving surfaces thereof bisected in a right-and-left direction into two light receiving areas E and F (or G and H or I and J). Among them, the light receiving elements 133 and 134 respectively receive two side beams separated by the hologram plate 122, and the light receiving element 135 receives the main beam.

Each of the light receiving elements 131, 132, 133, 134, and 135 detects an amount of received light of the beam spot in each of the foregoing light receiving areas A, W, B, C, Z, D, E, F, G, H, I, and J divided in the manner described above, and outputs an analog signal (hereinafter a detection signal) that is an electric signal into which the amount of received light is converted. Hereinafter, the detection signals outputted from the respective light receiving areas A, W, B, C, Z, D, E, F, G, H, I, and J shall be referred to as detection signals A, W, B, C, Z, D, E, F, G, H, I, and J.

The detection signals I and J outputted from the light receiving element 135 of the photo-detection unit 130 are added up as expressed by, for example, an equation below, whereby a RF signal is produced as a reproduction signal. Moreover, the servo control circuit 30 performs predetermined computation, which is expressed by, for example, the equations (1) to (3) below, on the basis of the detection signals A, W, B, C, Z, D, E, F, G, H, I, and J outputted from the light receiving elements 131, 132, 133, 134, and 135 of the photo-detection unit 130, and produces a servo error signal such as a differential push-pull (DPP)-type tracking error signal (TE signal) or an SSD-type focus error signal (FE signal).

$$RF = I + J \qquad\qquad (1)$$

$$FE = (A+B+Z) - (C+D+W) \qquad\qquad (2)$$

$$TE = MPP - Kt * (SPP1+SPP2)$$

$$= (I-J) - Kt * \{(E-F)+(G-H)\} \qquad\qquad (3)$$

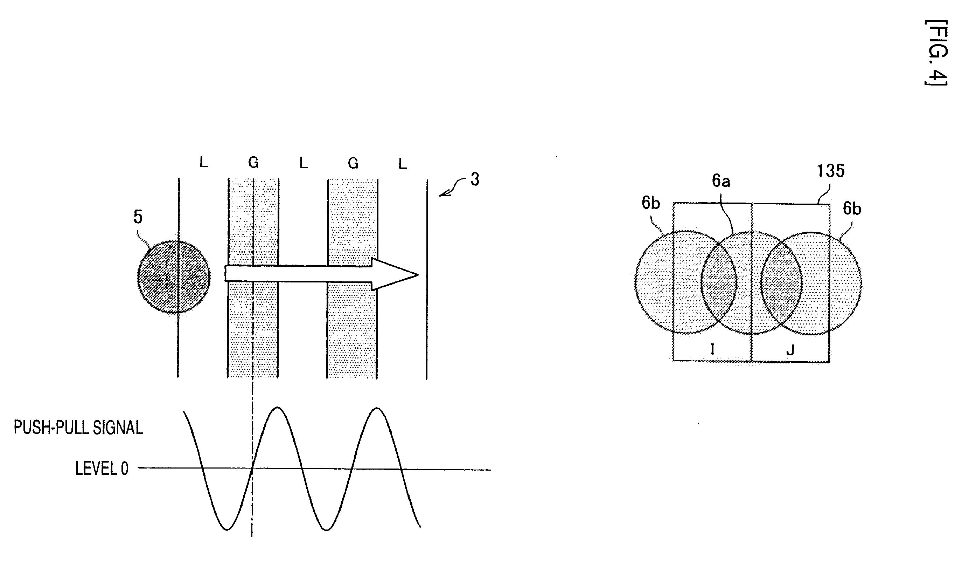

Now, referring to Fig. 4 to Fig. 6, the principle of a general three-beam DPP method that is one of tracking error detection methods, and underlying problems will be described below.

A DPP method is a technique for detecting a tracking error by utilizing a push-pull signal (PP signal). As shown in (a) of Fig. 4, when a laser spot 5 irradiated to the optical disk 3 moves in a radial direction of the optical disk 3 while traversing multiple tracks (grooves G and lands L), a sine-wave push-pull signal is detected. The push-pull signal is a signal to be used to detect the positional relationship between the laser spot 5 and the tracks. If the push-pull signal is zero, the laser spot 5 is located in the center of a track (the center of the groove G or land L).

The push-pull signal is, as show in (b) of Fig. 4, detected by receiving return light of laser light, which is reflected from the optical disk 3, in the light receiving element 135 or the like of the photo-detection unit 130, and computing the difference between amounts of light received in the bisectional light-receiving areas I and J (PP=I-G). To be more specific, laser light reflected/diffracted from the land L or groove G in the optical disk 3 undergoes interference due to an optical path difference caused by the depth of the groove G. An intensity distribution varies depending on the positional relationship between the laser spot 5 and the land L or groove G. In other words, 0-order diffracted light 6a reflected from the land L or groove G in the optical disk 3 and first-order diffracted light 6b are received by the light receiving element 135. Since the overlapping parts of the 0-order diffracted light 6a and first-order diffracted light 6b interfere with each other, the amount of light received by the light receiving element 135 increases or decreases. As a result, as shown in (a) of Fig. 4, a PP signal increases or decreases according to the irradiated position of the laser spot 5 on the optical disk 3.

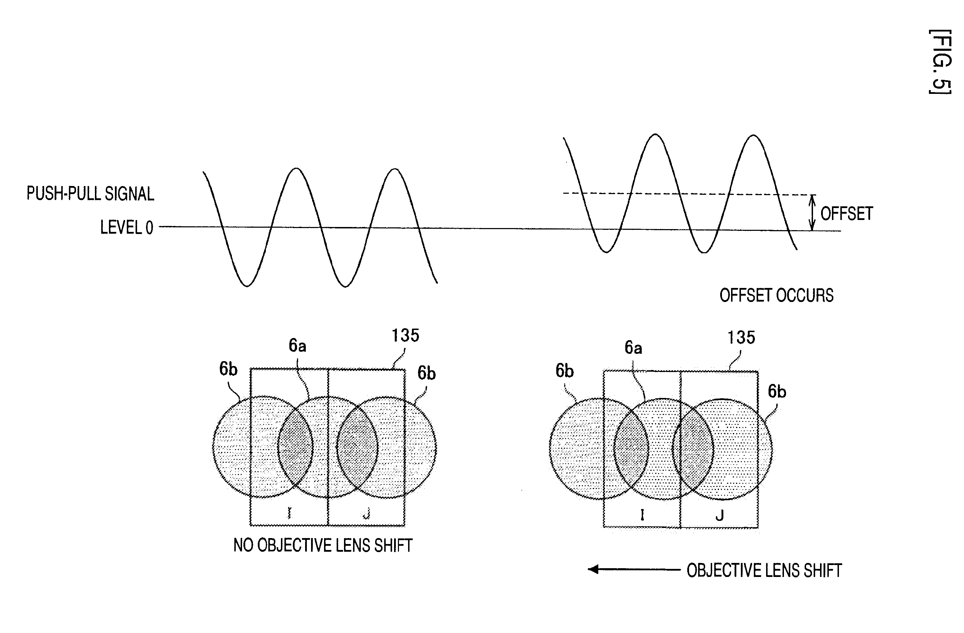

However, as shown in (a) and (b) of Fig. 5, when a positional deviation between the objective lens 120 and the photo-detection unit 130 (hereinafter, an objective lens shift) occurs, the received position of laser light (0-ordre diffracted light 6a and first-order diffracted light 6b) on the light receiving element 135 is displaced in a shift direction of the objective lens. As a result, an offset occurs in a PP signal that is the difference between the amounts of light received in the areas I and J. Once the offset occurs, even when the laser spot 5 is aligned with the center of a track, since the signal level of the PP signal is not zero, even if the PP signal having the offset occurred therein is regarded as a tracking error signal, tracking control cannot be accurately achieved.

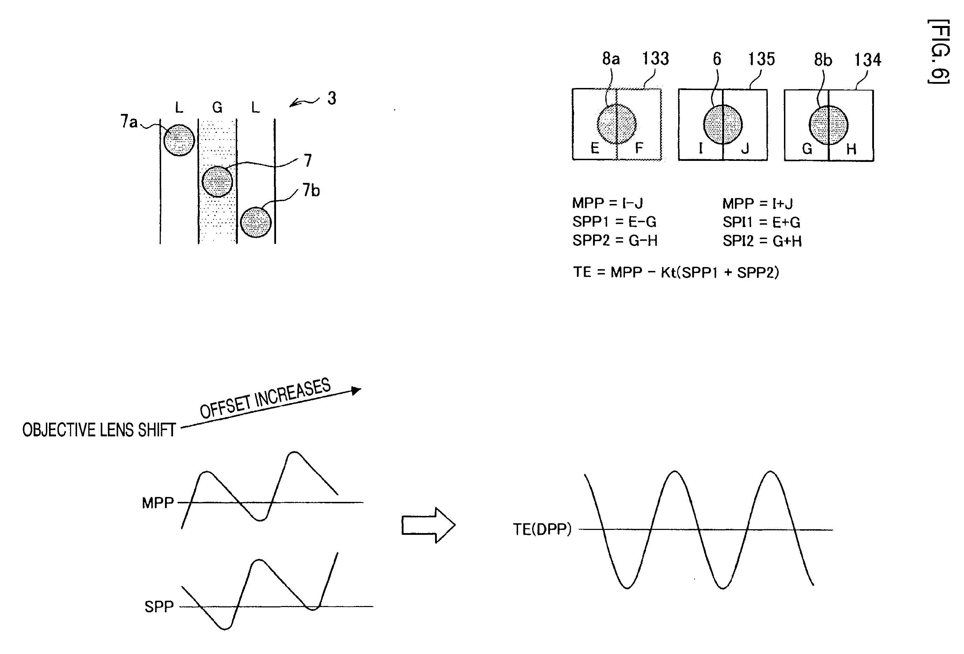

In the DPP method, as shown in (a) of Fig. 6, laser light is diffracted and separated into a main beam and, for example, two side beams. A beam spot 7 (hereinafter a main spot 7) of the main beam and beam spots (hereinafter, side spots 7a and 7b) of, for example, two side beams are irradiated to the optical disk 3. At this time, the main spot 7 is irradiated to be located in the center, and the side spots 7a and 7b are irradiated to be located on both sides with the main spot 7 interposed between them. As shown in (b) of Fig. 6, the light receiving element 135 for the main beam receives a beam spot 6 of reflected light of the main beam. Based on the detection signals I and J of the light receiving element 135, a main push-pull signal (MPP signal) and a main pull-in signal (MPI signal) are computed according to equations presented below. Moreover, the two light receiving elements 133 and 134 for the side beams respectively receive beam spots 8a and 8b of reflected light of the side beams. Based on the detection signals E, F, G, and H of the light receiving elements 133 and 134, two side push-pull signals (SPP1 and SPP2 signals) and two side pull-in signals (SPI1 and SPI2 signals) are computed according equations presented below.

$$MPP = I - J$$

$$SPP1 = E - F$$

$$SPP2 = G - H$$

$$MPI = I + J$$

$$SPI1 = E + F$$

$$SPI2 = G + H$$

Herein, the MPP signal is a difference signal representing the difference (I-J) between amounts of light received in the bisectional light-receiving areas I and J of the light receiving element 135 that receives reflected light of the main beam. Moreover, the MPI signal is a sum signal representing the sum (I+J) of the amounts of light received in the bisectional light-receiving areas I and J of the light receiving element 135 that receives the reflected light of the main beam. Moreover, the SPP signal is a difference signal representing the difference (E-F or G-H) between amounts of light received in the bisectional light-receiving areas E and F (or G and H) of the light receiving element 133 (or 134) that receives reflected light of the side beams. Moreover, the SPI signal is a sum signal representing the sum (E+F or G+H) of the amounts of light received in the bisectional-light receiving areas E and F (or G and H) of the light receiving element 133 (or 134) that receives reflected light of the side beams.

Based on the thus computed MPP signal, SPP1 signal, and SPP2 signal, the difference between the MPP signal and a value obtained by multiplying the SPP signals by Kt is computed according to an equation (3) below. Thus, a tracking error signal (TE signal) is produced.

$$TE = MPP - Kt * (SPP1+SPP2) \qquad\qquad (3)$$

Herein, Kt is a coefficient (balance gain) to be used to perform level adjustment so that the signal level of the MPP signal will be squared with the signal level of the SPP signals. As described above, since the main beam and side beams separated by the grating 113 are different from one another in intensity, the signal level of the detection signal of the main beam detected by the photo-detection unit 130 and the signal level of the detection signals of the side beams detected thereby have a difference. For offset compensation, a gain given by an amplification circuit of the analog signal processing unit 40 (that is, Kt value) is adjusted in order to square the signal levels with each other. The coefficient Kt is initialized in a process on a drive adjustment line for the optical disk device 1 or during startup processing performed at the time of insertion of the optical disk 3.

Since the DPP-type TE signal is thus obtained, the aforesaid offset (see Fig. 5) can be canceled. Namely, as shown in (c) of Fig. 6, when an objective lens shift varies, the offsets in the MPP signal and SPP signals have the same polarity. In contract, the polarities of the push-pull signals are opposite to each other. For example, when the objective lens shift increases, the offsets in the MPP signal and SPP signals increase. However, the polarities of the push-pull signals of the MPP signal and SPP signals are reverse to each other.

Consequently, by obtaining the difference between the MPP signal, which has the foregoing property, and the Kt multiple of the SPP signals, the offsets in the MPP signal and SPP signals can be canceled as shown in (d) of Fig. 6. Moreover, the signal levels of the push-pull signals are doubled in order to obtain a TE signal. Thus, in the DPP method, the TE signal having the offset, which is caused by the objective lens shift, removed therefrom can be produced.

However, as mentioned above, when the reflectance of the main-beam irradiated part of the optical disk 3 and/or the reflectance of the side-beam irradiated parts of the optical disk 3 varies, a level difference occurs relatively between the MPP signal and the SPP signals that are multiplied by Kt. The initialized Kt value becomes inappropriate. For example, in a case where since the ratio of the signal level of the MPP signal (the intensity of the main beam) to the signal level of the SPP signals (the intensity of the side beams) is 4:1 at the time of initialization, Kt is set to 4, if the reflectance of the main-beam irradiated part decreases during data recording and the ratio of the signal level of the MPP signal to the signal level of the SPP signals becomes 3:1, the necessity of changing Kt to 3 arises in reality. If the initial value of 4 of Kt is kept used, the offset having occurred in the DPP-type TE signal remains intact due to the objective lens shift or radial skew. Eventually, tracking control cannot be properly achieved.

In order to solve the problem, conventionally, the analog signal processing unit 40 that computes the TE signal according to the equation (3) computes the TE signal after individually normalizing the MPP signal and SPP signals, that is, performs automatic gain control (AGC) on the TE signal. Specifically, individual normalization of two types of PP signals can be achieved by, for example, as expressed by an equation (4) below, dividing the MPP signal by the MPI signal and dividing the SPP signals by the SPI signals.

$$TE = (MPP/MPI) - Kt * \{(SPP1/SPI1)+(SPP2/SPI2)\}$$

$$= (I-J)/(I+J) - Kt * \{(E-F)/(E+F)+(G-H)/(G+H)\}$$

$$(4)$$

In the conventional constitution in which the MPP signal and SPP signals are individually normalized according to the equation (4), multiple analog normalization circuits are needed. This poses a problem in that a circuit scale, power consumption, and a cost increase. In the present embodiment that attempts to solve the problem, for a TE signal of a general DPP type in which a track modulating component (a tracking positional deviation between a target track on the optical disk 3 and the objective lens) is manifested in the SPP signals, the analog signal processing unit 40 does not individually normalize the MPP signal and SPP signals according the equation (4), but the digital signal processing unit 50 uses four signals of the TE signal, a CE signal, an MPI signal, and an SPI signal to compensate an amplitude fluctuation/offset fluctuation in the TE signal caused by the variations in the reflectance of the main-beam irradiated part and the reflectance of the side-beam irradiated parts. The constitution characteristic of the present embodiment will be described below.

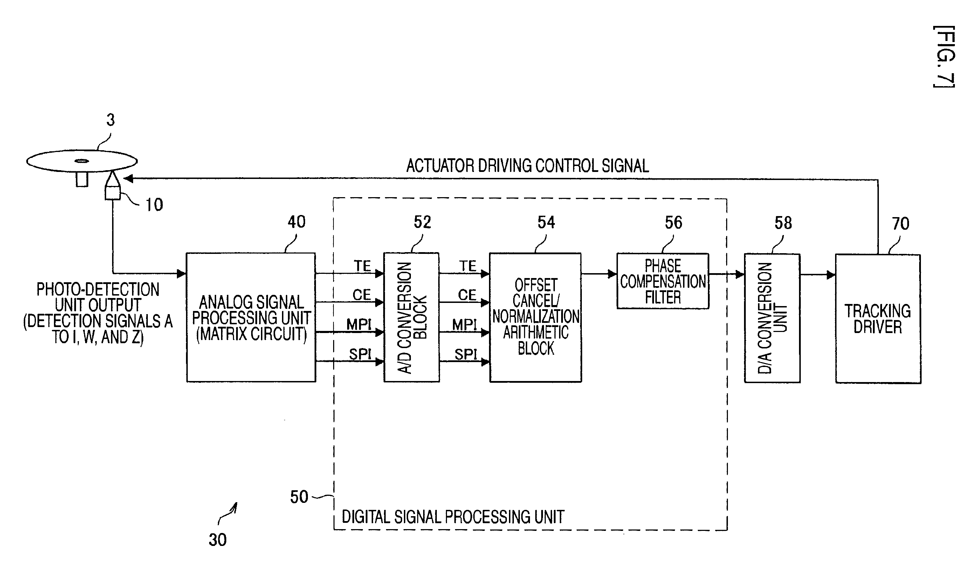

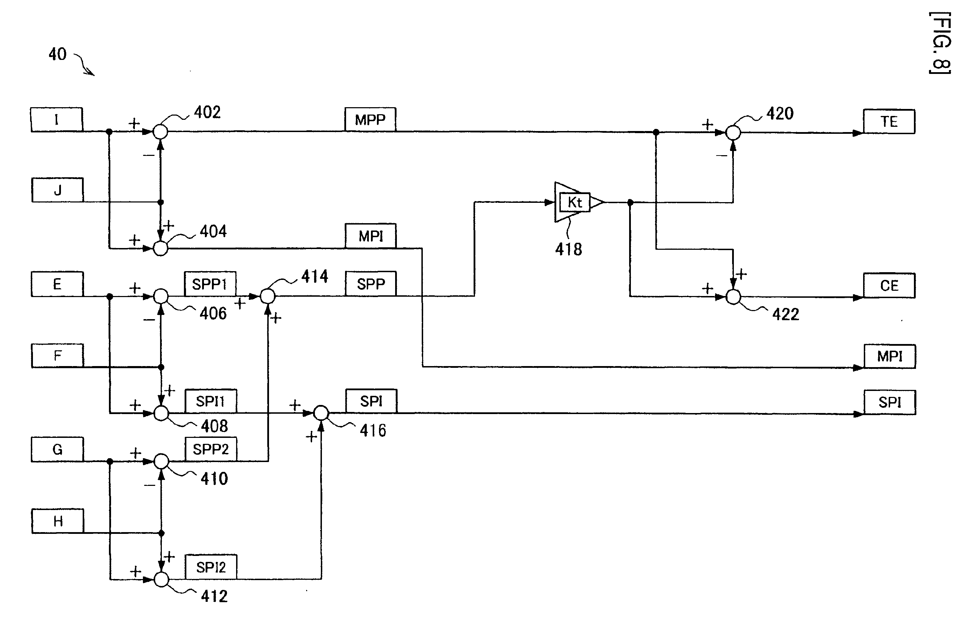

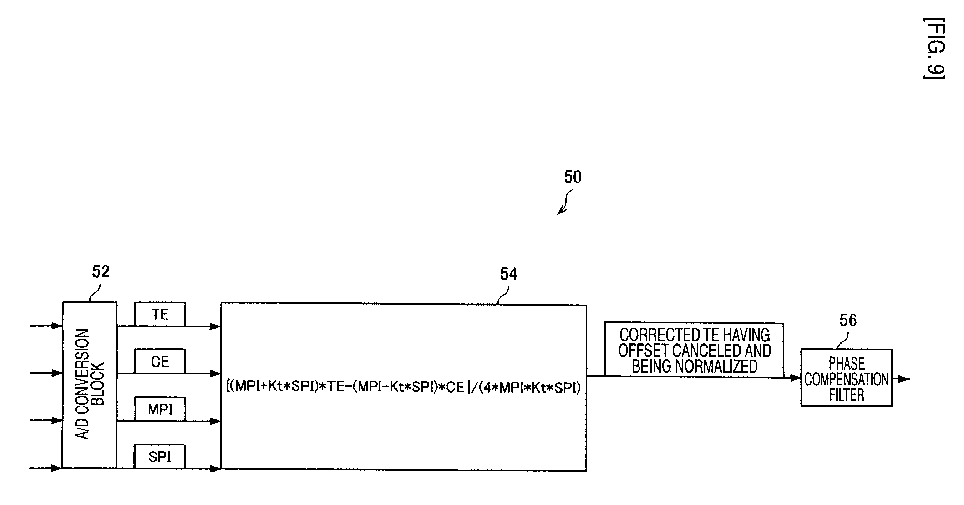

To begin with, referring to Fig. 7 to Fig. 9, the constitution of the servo control circuit 30 included in the optical disk 1 in accordance with the present embodiment will be described below. Fig. 7 is a block diagram showing the overall constitution of the servo control circuit 30 in the optical disk device 1 in accordance with the present embodiment. Fig. 8 is a circuit diagram showing the constitution of the analog signal processing unit 40 in accordance with the present embodiment. Fig. 9 is a block diagram showing the constitution of the digital signal processing unit 50 in accordance with the present embodiment. In Fig. 7 to Fig. 9, the components of the servo control circuit 30, analog signal processing unit 40, and digital signal processing unit 50 relating mainly to production of a tracking error signal are extracted and shown, but the other components are not shown.

As shown in Fig. 7, the servo control circuit 30 is an example of a tracking error signal generating circuit, and produces a tracking error signal for use in performing tracking control on the laser-beam irradiated position on the optical disk 3. The servo control circuit 30 includes the analog signal processing unit 40, digital signal digital signal processing unit 50 for a TE signal, a D/A conversion unit 58, and tracking driver 70 that is an example of a tracking control unit.

The analog signal processing unit 40 is formed with an analog circuit such as an analog front-end IC. The analog signal processing unit 40 includes a matrix circuit and an amplification circuit for use in computing the MPI signal, MPP signal, SPI signal SPP signal, TE signal, and CE signal.

The digital signal processing unit 50 is formed with, for example, a servo digital signal processor (DSP). The digital signal processing unit 50 includes an A/D conversion block 52 that converts an analog signal into a digital signal, an offset cancel/normalization arithmetic block 54 that performs offset cancel and normalization computation according to a predetermined arithmetic expression, and a phase compensation filter 56 that performs phase compensation on a TE signal.

The operation of the servo control circuit 30 having the above constitution will be described below. The detection signals A, B, C, D, E, F, G, H, I, W, and Z outputted from the photo-detection unit 130 of the optical pickup 10 are inputted to the analog signal processing unit 40. The analog signal processing unit 40 performs matrix computation on the detection signals A to I, W, and Z so as to produce the analog signals of the TE signal, CE signal, MPI signal, and SPI signal.

The analog signals of the TE signal, CE signal, MPI signal, and SPI signal are inputted to the A/D conversion block 52 of the digital signal processing unit 50 and converted into digital signals. Further, the offset cancel/normalization arithmetic block 54 performs offset cancel and normalization computation on the TE signal, CE signal, MPI signal, and SPI signal, which are converted into the digital signals by the A/D conversion block 52, according to a predetermined arithmetic expression. Consequently, the TE signal has an offset component, which is caused by the variation in the reflectance of the main-beam irradiated part of the optical disk 3 and/or the reflectance of the side-beam irradiated parts thereof, removed therefrom, and is normalized. The corrected TE signal having the offset canceled and being normalized is outputted from the offset cancel/normalization arithmetic block 54 to the phase compensation filter 56.

After the corrected and normalized TE signal has the phase thereof compensated by the phase compensation filter 56, the TE signal is converted into an analog signal by the D/A conversion unit 58, and inputted to the tracking driver 70. The tracking driver 70 produces a control signal, which is used to control driving of a tracking actuator, for example, the biaxial actuator 140, on the basis of the corrected TE signal, and outputs the control signal to the biaxial actuator 140. Consequently, the biaxial actuator 140 is driven in a tracking direction, whereby tracking servo for sustaining the laser spot 5 in the center of a track on the optical disk 3 is realized.

Now, referring to Fig. 8, an example of the matrix arrangement of the analog signal processing unit 40 in accordance with the present embodiment will be described.

As shown in Fig. 8, the detection signals E to J are inputted from the photo-detection unit 130 to the analog signal processing unit 40. A subtractor 402 computes the difference (I-J) between the detection signals I and J, whereby the MPP signal is produced. An adder 404 computes the sum (I+J) of the detection signals I and J, whereby the MPI signal is produced.

Moreover, a subtractor 406 computes the difference (E-F) between the detection signals E and F, whereby the SPP1 signal is produced. An adder 408 computes the sum (E+F) of the detection signals E and F, whereby the SPI1 signal is produced. Moreover, a subtractor 410 computes the difference (G-H) between the detection signals G and H, whereby the SPP2 signal is produced. An adder 412 computes the sum (G+H) of the detection signals G and H, whereby the SPI2 signal is produced. Further, an adder 414 computes the sum (E-F+G-H) of the SPP1 signal and SPP2 signal, whereby the SPP signal is produced. An adder 416 computes the sum (E+F+G+H) of the SPI1 signal and SPI2 signal, whereby the SPI signal is produced. Further, the SPP signal is multiplied by a predetermined gain (Kt) by an amplifier 418. The Kt value is a balance gain for use in matching the signal level (amplitude) of the MPP signal with that of the SPP signal. The Kt value is, as mentioned above, set to an appropriate predetermined value dependent on the amount of light emitted from the laser diode 110, the reflectance of the optical disk 3, or the like for drive line adjustment of the optical disk device 1 or for startup adjustment at the time of insertion of the disk 3.

Further, a subtractor 420 obtains the difference between the MPP signal and the SPP signal multiplied by Kt, whereby the DPP-type TE signal (TE=MPP-Kt*SPP) is produced. Moreover, an adder 422 obtains the sum of the MPP signal and the SPP signal multiplied by Kt, whereby a center error signal (CE signal) (CE=MPP+Kt*SPP) is produced. The center error signal is a signal that is the sum of the MPP signal and SPP signal whose signal levels are matched with each other, that has a track modulating component (PP component) removed therefrom, and that mainly contains an offset component.

As mentioned above, the analog signals of the TE signal, CE signal, MPI signal, and SPI signal are produced by the analog signal processing unit 40, and outputted to the digital signal processing unit 50. At this time, neither the MPP signal nor the SPP signal is individually normalized by the MPI signal or the SPI signal. Therefore, the analog normalization circuit need not be included in the analog signal processing unit 40. Consequently, the circuit scale, power consumption, and cost of the analog signal processing unit 40 can be reduced.

Next, referring to Fig. 9, the arithmetic expression for the offset cancel/normalization arithmetic block 54 of the digital signal processing unit 50 in accordance with the present embodiment will be described below.

As shown in Fig. 9, the offset cancel/normalization arithmetic block 54 performs offset cancel and normalization on a general three-beam DPP-type TE signal. The offset cancel/normalization arithmetic block 54 computes the TE signal, CE signal, MPI signal, and SPI signal, which are converted into digital signals by the A/D conversion block 52, according to an arithmetic expression (5) presented below so as to obtain the corrected TE signal having the offset canceled and being normalized.

$$\text{Corrected TE} = \{(MPI+Kt*SPI)*TE-(MPI-Kt*SPI)*CE\}/(4*MPI*Kt*SPI)$$

$$(5)$$

When the SPI signal multiplied by Kt is outputted from the analog signal processing unit 40 instead of the SPI signal, the arithmetic processing of the arithmetic expression (5) by the digital signal processing unit 50 can be simplified into that of an arithmetic expression (6) presented below. Consequently, the digital signal processing unit 50 can execute the computation of obtaining the corrected TE without holding the Kt value.

$$\text{Corrected TE} = \{(MPI+SPI)*TE-(MPI-SPI)*CE\}/(4*MPI*SPI)$$

$$(6)$$

Now, a method of drawing out the arithmetic expression (5) to be used by the offset cancel/normalization arithmetic block 54 of the digital signal processing unit 50 will be described below.

Fundamentally, a PP signal can be considered as the sum of a track modulating component and an offset component. The track modulating component is a component expressing the degree of a positional deviation between the beam spot 5 irradiated from the objective lens 120 and the center of a track on the optical disk 3. The offset component is a component expressing the degree of a positional deviation between the objective lens 120 and the light receiving element of the photo-detection unit 130 derived from an objective lens shift. The amplitudes (signal levels) of PP signals and PI signals are determined by multiplying the intensity (laser power) of laser light irradiated to the optical disk 3 by the reflectance of the laser irradiated part, and are thought to be proportional to each other. Based on the fundamental idea, an expression is, as described below, recomposed so that the track modulating component contained in the PP signals can be obtained from the TE signal, CE signal, MPI signal, and SPI signal.

First, variables are defined as mentioned below.

f: a normalized PP signal track modulating component (a component obtained by removing an offset from the PP signal)
g: a normalized PP signal offset component
MPI: an amount of light in the light receiving element 135 (main photodetector) for the main beam
SPI: an amount of light in the light receiving elements 133 and 134 (side photodetectors) for the side beams
Kt: a cancel gain
TE_0: a TE signal outputted from the analog signal processing unit 40 (no AGC)
CE_0: a CE signal outputted from the analog signal processing unit 40 (no AGC)
Using the definitions, the MPP signal and SPP signal are expressed by equations (7) and (8) below.

$$MPP = MPI * (f+g) \qquad (7)$$

$$SPP = SPI * (-f+g) \qquad (8)$$

Moreover, the TE signal TE_0 and CE signal CE_0 are expressed by equations (9) and (10) below.

$$TE\_0 = MPP - Kt * SPP$$

$$= MPI * (f+g) - Kt * SPI * (-f+g)$$

$$= (MPI+Kt*SPI) * f + (MPI- Kt*SPI) * g \qquad (9)$$

$$CE\_0 = MPP + Kt * SPP$$

$$= MPI * (f+g) + Kt * SPI * (-f+g)$$

$$= (MPI-Kt*SPI) * f + (MPI+Kt*SPI) * g \qquad (10)$$

In the case of Kt=MPI/SPI, the second term of the right side of the equation (9) becomes 0, and the TE signal without the offset component is obtained. Herein, Kt is set to an arbitrary value. The equations (9) and (10) are recomposed in order to delete the offset component g.

First, both the sides of the equation (9) are multiplied by (MPI+Kt*SPI) and both the sides of the equation (10) are multiplied by (MPI-Kt*SPI). Equations (11) and (12) presented below ensue.

$$(MPI+Kt*SPI) * TE\_0$$

$$= (MPI+Kt*SPI)^2 * f + (MPI^2-Kt^2*SPI^2) * g \quad (11)$$

$$(MPI-Kt*SPI) * CE\_0$$

$$= (MPI-Kt*SPI)^2 * f + (MPI^2-Kt^2*SPI^2) * g \quad (12)$$

Thereafter, the equation (12) is subtracted from the equation (11) in order to obtain an equation (13) below.

$$(MPI+Kt*SPI) * TE\_0 - (MPI-Kt*SPI) * CE\_0$$

$$= \{(MPI+Kt*SPI)^2-(MPI-Kt*SPI)^2 * f$$

$$= 4 * MPI * Kt * SPI * f \qquad (13)$$

The normalized PP signal track modulating component f is obtained from the equation (13), whereby an equation (14) below ensues.

$$f = \{(MPI+Kt*SPI)*TE\_0-(MPI-Kt*SPI)*CE\_0\}$$

$$/(4*MPI*Kt*SPI) \qquad (14)$$

Herein, f denotes a TE signal (corrected TE signal) that has an offset compensated and is normalized. The equation (14) is equivalent to the arithmetic expression (5).

The offset cancel/normalization arithmetic block 54 of the digital signal processing unit 50 performs the offset cancel and normalization computation according to the arithmetic expression (5) obtained as mentioned above, corrects the TE signal inputted from the analog signal processing unit 40 so that the TE signal will have the offset component, which is derived from the variations in the reflectance of the main-beam irradiated part and the reflectance of the side-beam irradiated parts, removed therefrom and the TE signal will contain a track modulating component alone, and thus produces the normalized TE signal. The tracking driver 70 accurately executes tracking control using the corrected TE signal, and causes the beam spot 5 to follow a track in the optical disk 3.

(Second Embodiment)

Next, an optical disk device 1 in accordance with the second embodiment of the present invention, a servo control circuit 30 serving as a tracking error signal generating circuit, a tracking error signal correcting method, and a program will be described below. The second embodiment is different from the optical disk device 1 in accordance with the first embodiment, which uses a general three-beam DPP-type TE signal, in a point that a TE signal of a DPP type in which a track modulating component (push-pull component) is not manifested is a signal obtained by detecting side beams is employed, and in the constitutions of an analog signal processing unit 40 and a digital signal processing unit 50 of the servo control circuit 30 that produces the TE signal. However, since the other functional components are substantially identical to those of the first embodiment, the detailed description will be omitted (see Fig. 1 to Fig. 7).

In the second embodiment, a tracking error signal is obtained according to a DPP method in which no track modulating component (push-pull component) is manifested in an SPP signal. The DPP method in which no track modulating component is manifested in the SPP signal includes, for example, a five-beam DPP method in which one main spot and four side spots are irradiated to the optical disk 3, and a three-beam DPP method in which two side spots are irradiated to the optical disk 3 while being out of focus. In the DPP methods, the SPP signal has no track modulating component manifested therein but contains only a component equivalent to an offset in an MPP signal. In this case, when the difference between the MPP signal and SPP signal is obtained with the amplitude of the offset component of the MPP signal squared with the amplitude of the SPP signal, offset cancel can be achieved.

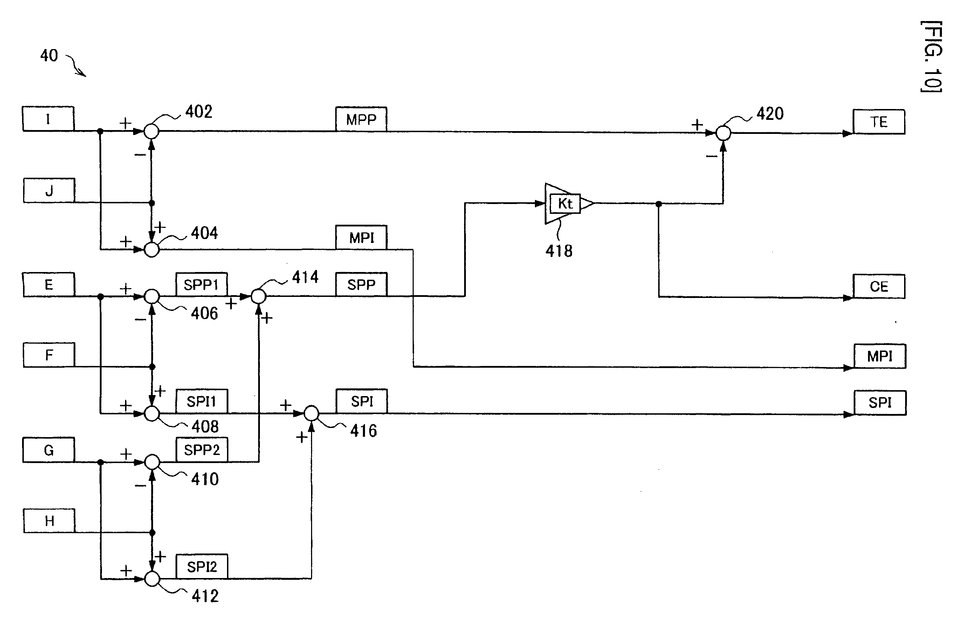

Referring to Fig. 10, an example of a matrix arrangement of the analog signal processing unit 40 in accordance with the second embodiment of the present invention will be described below. Fig. 10 is a circuit diagram showing the constitution of the analog signal processing unit 40 in accordance with the present embodiment.

As shown in Fig. 10, the analog signal processing unit 40 in accordance with the second embodiment is substantially identical to the analog signal processing unit 40 in accordance with the first embodiment except a point that the adder 422 is not included and a product of the SPP signal by the Kt value is outputted as a CE signal. In the second embodiment, since the SPP signal does not contain the track modulating component but contains only an offset component of a PP signal, the SPP signal can be used as the CE signal as it is.

The analog signal processing unit 40 produces the analog signals of the TE signal, CE signal, MPI signal, and SPI signal, and outputs them to the digital signal processing unit 50. At this time, similarly to the first embodiment, since neither the MPP signal nor the SPP signal is individually normalized with the MPI signal or SPI signal, the analog signal processing unit 40 need not include an analog normalization circuit. Consequently, the circuit scale, power consumption, and cost of the analog signal processing unit 40 can be reduced.

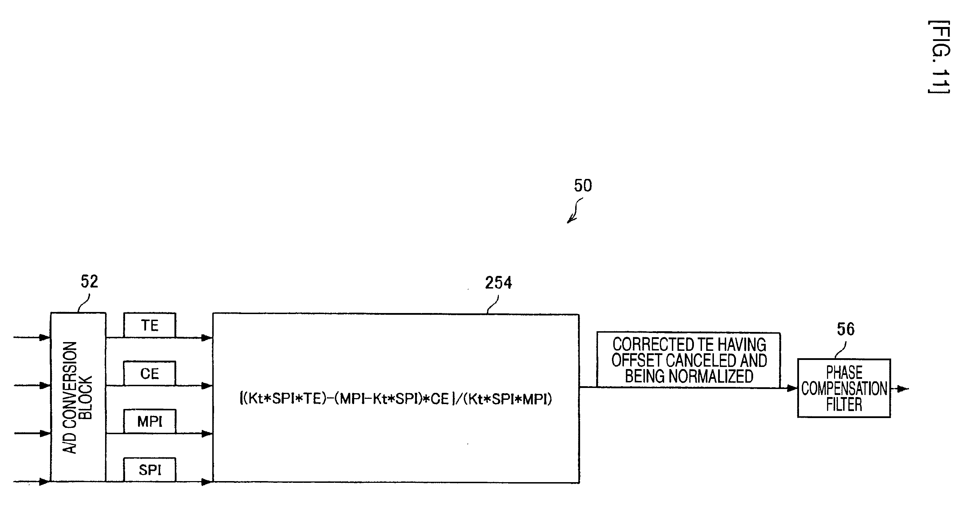

Referring to Fig. 11, the arithmetic expression for an offset cancel/normalization arithmetic block 254 of the digital processing unit 50 in accordance with the second embodiment of the present invention will be described below. Fig. 11 is a block diagram showing the constitution of the digital signal processing unit 50 in accordance with the present embodiment.

The offset cancel/normalization arithmetic block 254 in accordance with the second embodiment performs offset cancel and normalization on a TE signal of a DPP type (five-beam DPP or three-beam DPP in which side beams are irradiated while being out of focus) in which a track modulating component is not manifested in an SPP signal. The offset cancel/normalization arithmetic block 254 computes the TE signal, CE signal, MPI signal, and SPI signal, which are outputted from the analog signal processing unit 40 and converted into digital signals by the A/D conversion block 52, according to an arithmetic expression (15) presented below, and thus obtains the corrected TE signal having the offset canceled and being normalized.

$$\text{Corrected TE}$$
$$= \{(Kt*SPI*TE) - (MPI - Kt*SPI)*CE\} / (Kt*SPI*MPI) \qquad (15)$$

Similarly to the first embodiment, when an SPI signal multiplied by Kt is outputted from the analog signal processing unit 40 instead of the SPI signal, the arithmetic processing performed based on the arithmetic expression (15) by the digital signal processing unit 50 can be simplified into an arithmetic expression (16) presented below. Consequently, even when the digital signal processing unit 50 does not hold the Kt value, the computation of obtaining the corrected TE can be executed.

$$\texttt{Corrected TE = \{(SPI*TE)-(MPI-SPI)*CE\}/(SPI*MPI)}$$

$$(16)$$

Now, a method of drawing out the arithmetic expression (15) to be employed by the offset cancel/normalization arithmetic block 254 of the digital signal processing unit 50 will be described below. The fundamental idea based on which the expression (15) is drawn out, and the definitions of various variables are identical to those in the first embodiment.

Using the aforesaid definitions of variables, the MPP signal and SPP signal are expressed by equations (17) and (18) below.

$$\texttt{MPP = MPI * (f+g)} \qquad (17)$$

$$\texttt{SPP = SPI * g} \qquad (18)$$

Moreover, the TE signal TE_0 and CE signal CE_0 are expressed by equations (19) and (20) below.

$$\texttt{TE\_0 = MPP - Kt * SPP}$$

$$\texttt{= MPI * (f+g) - Kt * SPI * g}$$

$$\texttt{= MPI * f + (MPI-Kt*SPI) * g} \qquad (19)$$

$$\texttt{CE\_0 = Kt * SPP}$$

$$\texttt{= Kt * SPI * g} \qquad (20)$$

When the equations (19) and (20) are recomposed in order to remove the offset component g, an equation (21) for obtaining the track modulating component f can be drawn out.

$$f = (TE\_0/MPI) - (MPI-Kt*SPI) * g/MPI$$

$$= (TE\_0/MPI) - (MPI-Kt*SPI) * CE\_0 / (Kt*SPI*MPI)$$

$$(21)$$

Herein, f denotes a TE signal (corrected TE signal) having an offset compensated and being normalized. The equation (21) is equivalent to the arithmetic expression (15).

As mentioned above, the offset cancel/normalization arithmetic block 254 of the digital signal processing unit 50 in accordance with the second embodiment performs the offset cancel and normalization computation according to the thus obtained arithmetic expression (15), corrects the TE signal inputted from the analog signal processing unit 40 so that the TE signal will have the offset component, which is derived from the variations in the reflectance of the main-beam irradiated part and the reflectance of the side-beam irradiated parts, removed therefrom and will contain only the track modulating component, and thus produces the normalized TE signal. The tracking driver 70 accurately execute tracking control according to the corrected TE signal, and causes the beam spot 5 to follow a track on the optical disk 3.

(Examples)

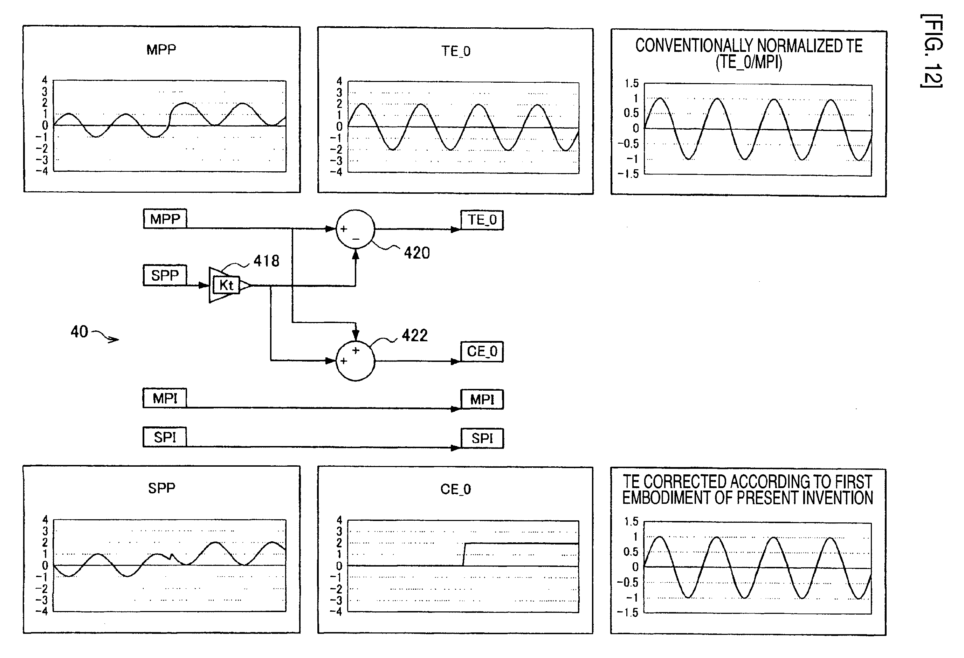

Referring to Fig. 12 to Fig. 15, concrete examples of calculating an MPP signal, an SPP signal, a TE signal, and a CE signal when an offset has occurred in the MPP signal and SPP signal due to an objective lens shift, and calculating a tracking error signal (corrected TE signal) by performing the offset cancel/normalization computation in accordance with the first or second embodiment of the present invention will be described below. In the drawings, a conventional TE signal (TE_0/MPI) normalized with an MPI signal is shown as a comparative object. In any of the cases, the magnitude of an objective lens shift (magnitude of offset) is 150 $\mu$m, and the Kt value that is a balance gain for SPP and MPP is 1.0.

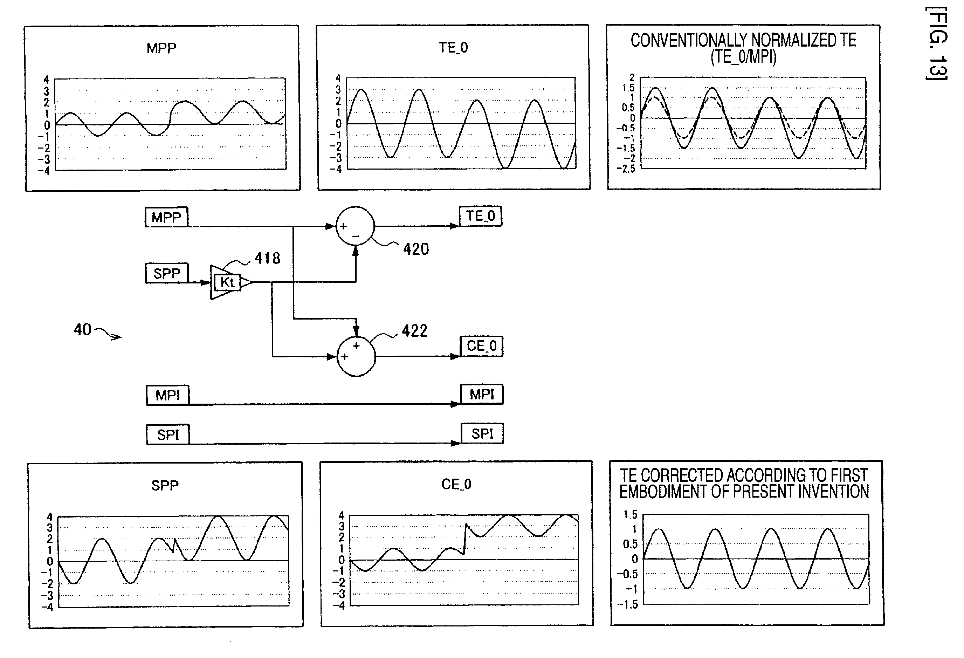

To begin with, referring to Fig. 12 and Fig. 13, the TE signal having the offset cancel and normalization computation performed thereon according to the arithmetic expression (5) in accordance with the first embodiment of the present invention is compared with the conventional TE signal.

Fig. 12 is concerned with a case where in a general three-beam DPP method (in which a track modulating component is manifested in an SPP signal), the reflectance of the main-beam irradiated part and the reflectance of the side-beam irradiated parts do not vary, and the initialized Kt value is appropriate. In this case, as shown in Fig. 12, even when an offset occurs in an MPP signal and an SPP signal due to an objective lens shift, since the Kt value is appropriate, the TE_0 signal outputted from the analog signal processing unit 40 has the offset appropriately canceled. In this case, the conventional TE signal normalized with MPI and the TE signal having undergone the offset cancel/normalization computation in accordance with the first embodiment appropriately have the offset canceled and are normalized.

On the other hand, Fig. 13 is concerned with a case where in the general three-beam DPP method, since the reflectance of the side-beam irradiated parts gets relatively higher (for example, is doubled), the initialized Kt value is deviated from an appropriate value. In this case, as shown in Fig. 13, when an offset occurs in an MPP signal and an SPP signal due to an objective lens shift or the like, since the Kt value is inappropriate, the offset in the TE_0 signal outputted from the analog signal processing unit 40 is not properly canceled. Consequently, an offset occurs in the conventional TE signal normalized with MPI. Moreover, an error occurs in normalization, and an undesirable amplitude fluctuation arises (a dashed line indicates an appropriate TE value and a solid line indicates an actual TE value). In contrast, the TE signal having undergone the offset cancel/normalization computation in accordance with the first embodiment appropriately has the offset canceled and is normalized.

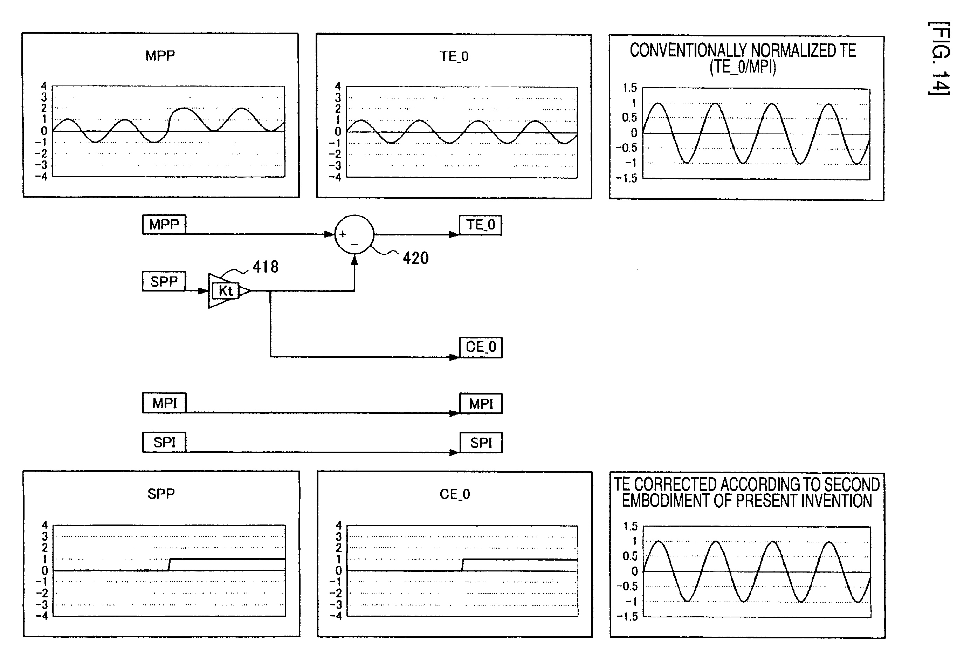

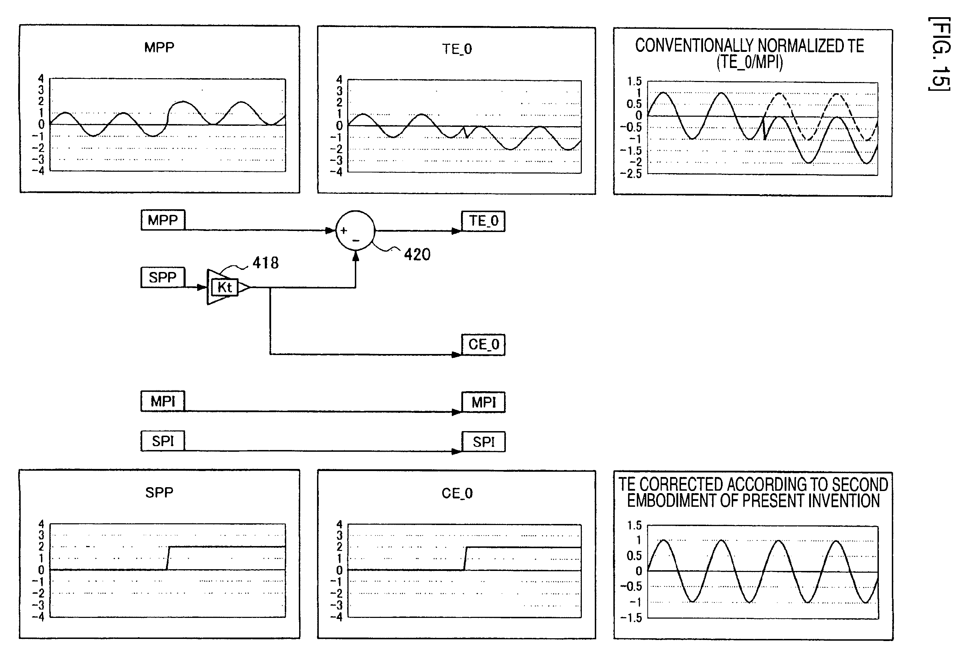

Next, referring to Fig. 14 and Fig. 15, the TE signal having the offset cancel and normalization computation performed according to the arithmetic expression (15) in accordance with the second embodiment of the present invention is compared with a conventional TE signal.

Fig. 14 shows a case where in the DPP method in which a track modulating component is not manifested in an SPP signal, the reflectance of the main-beam irradiated part and the reflectance of side-beam irradiated parts do not vary, and the initialized Kt value is appropriate. In this case, as shown in Fig. 14, even when an offset occurs in an MPP signal and an SPP signal due to an objective lens shift or the like, since the Kt value is appropriate, the TE_0 signal outputted from the analog signal processing unit 40 has the offset appropriately canceled. In this case, the conventional TE signal normalized with MPI and the TE signal having undergone the offset cancel/normalization computation in accordance with the second embodiment appropriately have the offset canceled and are normalized.

On the other hand, Fig. 15 is concerned with a case where in the DPP method in which a track modulating component is not manifested in an SPP signal, the reflectance of the side-beam irradiated parts gets relatively higher (for example, is doubled), the initialized Kt value is deviated from an appropriate value. In this case, as shown in Fig. 15, when an offset occurs in an MPP signal and an SPP signal due to an objective lens shift or the like, since the Kt value is inappropriate, the offset in the TE_0 signal outputted from the analog signal processing unit 40 is not properly canceled. Consequently, the offset occurs in the conventional TE signal normalized with MPI, and the offset is larger than that occurring in the general three-beam DPP method shown in Fig. 13. Moreover, as for the conventional TE signal, an error occurs in normalization, and an undesirable amplitude fluctuation arises (a dashed line indicates an appropriate TE value and a solid line indicates an actual TE value). In contrast, the TE signal having undergone the offset cancel/normalization computation in accordance with the second embodiment appropriately has the offset canceled and is normalized.

The TE signal correcting method of performing the offset cancel/normalization computation in accordance with the first and second embodiments of the present invention, and the servo control circuit 30 (tracking error signal generating circuit) of the optical disk device 1 that performs the computation have been described so far. According to the present embodiment, the digital signal processing unit 50 appropriately compensates an offset and an amplitude fluctuation in a TE signal attributable to the fact that the reflectance of the main-beam irradiated part of the recording surface of the optical disk 3 is different from the reflectance of the side-beam irradiated parts, and produces a proper TE signal having the offset canceled and being normalized. Consequently, since the corrected TE signal is used to appropriately execute tracking control, the main spot can be caused to accurately follow a track on the optical disk 3.

Further, the arithmetic processing for correcting the TE signal is executed by the digital signal processing unit 50 but is not executed by the analog signal processing unit 40. Therefore, the analog signal processing unit 40 need not individually normalize an MPP signal and an SPP signal using an MPI signal and an SPI signal respectively as conventionally. Consequently, multiple analog normalization circuits need not be included in the matrix circuit of the analog signal processing unit 40. The circuit scale, power consumption, and cost of the analog signal processing unit 40 can be reduced.

Moreover, the analog signal processing unit 40 computes a TE signal and a CE signal on the basis of an MPP signal, an MPI signal, an SPP signal, and an SPI signal, and outputs the signals to the digital signal processing unit 50. In the present embodiment, the MPP signal and SPP signal (amplitudes are relatively large) that may contain both a track modulating component and an offset component are not outputted from the analog signal processing unit 40 to the digital signal processing unit 50, but the TE signal (amplitude is relatively small) that mainly contains the track modulating components, and the CE signal (amplitude is relatively small) that mainly contains the offset components are outputted. Consequently, since a range width for the A/D conversion block 52 of a signal receiving side may be small, the freedom in designing the A/D conversion block 52 improves.

Referring to the appended drawings, the preferred embodiments of the present invention have been described. Needless to say, the present invention is not limited to the embodiment. A person with ordinary skill in the art could apparently come up with various variants or modifications within the category described in Claims. The variants or modifications shall belong to the technological scope of the present invention.

For example, in the aforesaid embodiments, the biaxial actuator 140 is adopted as a drive that moves the objective lens 120 in the tracking direction and focus direction. The present invention is not limited to the example. A tracking actuator that moves the objective lens 120 in the tracking direction, and a focusing actuator that moves the objective lens 120 in the focus direction may be included.

Moreover, in the aforesaid embodiments, the digital signal processing unit 50 includes the A/D conversion block 52. The present invention is not limited to this example. For example, the A/D conversion block 52 may be disposed outside the digital signal processing unit, and the D/A conversion unit 58 may be included in the digital signal processing unit 50.

Moreover, a program causing the servo control circuit 30 designed as an example of a tracking control circuit to execute the aforesaid various pieces of processing is encompassed in the technological scope of the present invention.

**Claims**

1. An optical disk device **characterized by** comprising:

   a photo-detection unit that receives reflected light of a main beam and side beams which are irradiated to an optical disk;
   an analog signal processing unit that produces a push-pull signal (MPP signal) and a pull-in signal (MPI signal) relevant to the main beam on the basis of an amount of received reflected light of the main beam detected by the photo-detection unit, produces a push-pull signal (SPP signal) and a pull-in signal (SPI signal) relevant to the side beams on the basis of an amount of received reflected light of the side beams detected by the photo-detection unit, produces a differential push-pull (DPP)-type tracking error signal (TE signal) and a center error signal (CE signal), which contains an offset component of the MPP signal and/or SPP signal, on the basis of the MPP signal and/or SPP signal, and outputs the analog signals of the TE signal, CE signal, MPI signal, and SPI signal;

an A/D conversion block that converts the analog signals of the TE signal, CE signal, MPI signal, and SPI signal, which are outputted from the analog signal processing unit, into digital signals;

a digital signal processing unit that computes the TE signal, CE signal, MPI signal, and SPI signal, which are converted into the digital signals by the A/D conversion block, according to a predetermined arithmetic expression so as to produce a TE signal having an offset, which is derived from a variation in the reflectance of the main-beam irradiated part of the optical disk and/or the reflectance of side-beam irradiated parts thereof, compensated; and

a tracking control unit that performs tracking control on the main-beam irradiated position on the optical disk on the basis of the TE signal corrected by the digital signal processing unit.

2. The optical disk device according to Claim 1, **characterized in that** the analog signal processing unit neither normalizes the MPP signal using the MPI signal nor normalizes the SPP signal using the SPI signal.

3. The optical disk device according to Claim 1, **characterized in that** when the DPP-type TE signal is a type of DPP signal having a track modulating component manifested in the SPP signal, the analog signal processing unit produces the CE signal on the basis of the sum of the MPP signal and SPP signal whose signal levels are matched with each other.

4. The optical disk device according to Claim 1, **characterized in that** when the DPP-type TE signal is a type of DPP signal having no track modulating component manifested in the SPP signal, the analog signal processing unit produces the CE signal on the basis of the SPP signal.

5. A tracking error signal generating circuit **characterized by** comprising:

an analog signal processing unit that produces a push-pull signal (MPP signal) and a pull-in signal (MPI signal) relevant to a main beam on the basis of an amount of received reflected light of the main beam irradiated to an optical disk, produces a push-pull signal (SPP signal) and a pull-in signal (SPI signal) relevant to side beams on the basis of an amount of received reflected light of the side beams irradiated to the optical disk, produces a differential push-pull (DPP)-type tracking error signal (TE signal) and a center error signal (CE signal), which contains an offset component of the MPP signal and/or SPP signal, on the basis of the MPP signal and/or SPP signal, and outputs the analog signals of the TE signal, CE signal, MPI signal, and SPI signal;

an A/D conversion block that converts the analog signals of the TE signal, CE signal, MPI signal, and SPI signal, which are outputted from the analog signal processing unit, into digital signals; and

a digital signal processing unit that computes the TE signal, CE signal, MPI signal, and SPI signal, which are converted into the digital signals by the A/D conversion block, according to a predetermined arithmetic expression so as to produce a TE signal having an offset, which is derived from a variation in the reflectance of main-beam irradiated part of the optical disk and/or the reflectance of side-beam irradiated parts thereof, compensated.

6. The tracking error signal generating circuit according to Claim 5, **characterized in that** the analog signal processing unit neither normalizes the MPP signal using the MPI signal nor normalizes the SPP signal using the SPI signal.

7. The tracking error signal generating circuit according to Claim 5, **characterized in that** when the DPP-type TE signal is a type of DPP signal having a track modulating component manifested in the SPP signal, the analog signal processing unit produces the CE signal on the basis of the sum of the MPP signal and SPP signal whose signal levels are matched with each other.

8. The tracking error signal generating circuit according to Claim 5, **characterized in that,** when the DPP-type TE signal is a type of DPP signal having no track modulating component manifested in the SPP signal, the analog signal processing unit produces the CE signal on the basis of the SPP signal.

9. A tracking error signal correcting method **characterized by** comprising:

a step at which an analog signal processing unit produces a push-pull signal (MPP signal) and a pull-in signal (MPI signal) relevant to a main beam on the basis of an amount of received reflected light of the main beam irradiated to an optical disk, produces a push-pull signal (SPP signal) and a pull-in signal (SPI signal) relevant to side beams on the basis of an amount of received reflected light of the side beams irradiated to the optical disk, produces a differential push-pull (DPP)-type tracking error signal (TE signal) and a center error signal (CE signal), which contains an offset component of the MPP signal and/or SPP signal, on the basis of the MPP signal and/or SPP signal, and outputs the analog signals of the TE signal, CE signal, MPI signal, and SPI signal; a step at which the analog signals of the TE signal, CE signal, MPI signal, and SPI signal outputted from the analog signal processing unit are converted into digital signals; and a step at which a digital signal processing unit computes the TE signal, CE signal, MPI signal, and SPI signal, which are converted into the digital signals, according to a predetermined arithmetic expression so as to produce a TE signal having an offset, which is derived from a variation in the reflectance of main-beam irradiated part of the optical disk and/or the reflectance of side-beam irradiated parts thereof, compensated.

10. A program causing a computer to execute:

a step at which an analog signal processing unit produces a push-pull signal (MPP signal) and a pull-in signal (MPI signal) relevant to a main beam on the basis of an amount of received reflected light of the main beam irradiated to an optical disk, produces a push-pull signal (SPP signal) and a pull-in signal (SPI signal) relevant to side beams on the basis of an amount of received reflected light of the side beams irradiated to the optical disk, produces a differential push-pull (DPP)-type tracking error signal (TE signal) and a center error signal (CE signal), which contains an offset component of the MPP signal and/or SPP signal, on the basis of the MPP signal and/or SPP signal, and outputs the analog signals of the TE signal, CE signal, MPI signal, and SPI signal; a step at which the analog signals of the TE signal, CE signal, MPI signal, and SPI signal outputted from the analog signal processing unit are converted into digital signals; and a step at which a digital signal processing unit computes the TE signal, CE signal, MPI signal, and SPI signal, which are converted into the digital signals, according to a predetermined arithmetic expression so as to produce a TE signal having an offset, which is derived from a variation in the reflectance of main-beam irradiated part of the optical disk and/or the reflectance of side-beam irradiated parts thereof, compensated.

[FIG. 1]

[FIG. 2]

[FIG. 3]

[FIG. 4]

[FIG. 5]

EP 2 045 803 A1

PUSH-PULL SIGNAL

LEVEL 0

OFFSET

OFFSET OCCURS

6b  6a  135  6b

I  J

NO OBJECTIVE LENS SHIFT

6b  6a  135  6b

I  J

OBJECTIVE LENS SHIFT

[FIG. 6]

MPP = I−J
SPP1 = E−G
SPP2 = G−H

MPP = I+J
SPI1 = E+G
SPI2 = G+H

TE = MPP − Kt(SPP1 + SPP2)

OBJECTIVE LENS SHIFT

OFFSET INCREASES

MPP

SPP

TE(DPP)

[FIG. 7]

EP 2 045 803 A1

[FIG. 8]

[FIG. 9]

[FIG. 10]

[FIG. 11]

56 PHASE COMPENSATION FILTER

CORRECTED TE HAVING OFFSET CANCELED AND BEING NORMALIZED

50

254

$\{(Kt*SPI*TE)-(MPI-Kt*SPI)*CE\}/(Kt*SPI*MPI)$

TE

CE

MPI

SPI

52 A/D CONVERSION BLOCK

[FIG. 12]

[FIG. 13]

[FIG. 14]

[FIG. 15]

<table>
<tr><td colspan="2" align="center"><b>INTERNATIONAL SEARCH REPORT</b></td><td colspan="2">International application No.<br>PCT/JP2007/064532</td></tr>
</table>

A.  CLASSIFICATION OF SUBJECT MATTER
*G11B7/09*(2006.01)i

According to International Patent Classification (IPC) or to both national classification and IPC

B.  FIELDS SEARCHED

Minimum documentation searched (classification system followed by classification symbols)
G11B7/09

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2002-230805 A  (Ricoh Co., Ltd.),<br>16 August, 2002 (16.08.02),<br>Full text; all drawings<br>(Family: none) | 1-10 |
| A | JP 6-236556 A  (Ricoh Co., Ltd.),<br>23 August, 1994 (23.08.94),<br>Full text; all drawings<br>(Family: none) | 1-10 |

☐  Further documents are listed in the continuation of Box C.          ☐  See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>    23 October, 2007 (23.10.07) | Date of mailing of the international search report<br>    30 October, 2007 (30.10.07) |
| Name and mailing address of the ISA/<br>    Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004213768 A